(19) Europäisches Patentamt

European Patent Office

Office européen des brevets

(11) **EP 1 078 817 A2**

(12) **EUROPÄISCHE PATENTANMELDUNG**

(43) Veröffentlichungstag:
28.02.2001 Patentblatt 2001/09

(51) Int. Cl.⁷: **B60Q 1/44**, B60Q 1/52

(21) Anmeldenummer: **00118382.1**

(22) Anmeldetag: **24.08.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **24.08.1999 DE 19940080**

(71) Anmelder:
• **Gerhaher, Max, Dipl.-Ing.**
  **99405 Landau (DE)**

• **Gerhaher, Franz, Dr**
  **94306 Straubing (DE)**

(72) Erfinder:
**Gerhaher, Max, Dipl.-Ing.**
**94405 Landau/Isar (DE)**

(74) Vertreter:
**Barske, Heiko, Dr. rer. nat.**
**Blumbach, Kramer & Partner**
**Patentanwälte**
**Radeckestrasse 43**
**81245 München (DE)**

(54) **Verfahren und Vorrichtung zum Warnen eines nachfolgenden Fahrzeugs beim Bremsen**

(57) Wenigstens eine Bremsleuchte (16) eines Fahrzeugs leuchtet während einer Bremsung bei zunehmendem Bremswert entsprechend einem augenblicklichen Wert des Bremswertes auf. Das Leuchten dauert nach Unterschreiten des Maximalwertes über eine von der Bremsung abhängige Haltedauer an und klingt nach Ablauf der Haltedauer während einer von der Bremsung abhängigen Abklingdauer ab.

FIG 3

EP 1 078 817 A2

**Beschreibung**

Die Erfindung betrifft ein Verfahren und eine Vorrichtung zum Warnen eines nachfolgenden Fahrzeugs beim Bremsen eines vorausfahrenden Fahrzeugs gemäß den Oberbegriffen der Ansprüche 1 und 8.

Aus der DE 4305186 C2 sind ein Verfahren zur Reduzierung der Gefahr von Auffahrunfällen im Straßenverkehr durch eine Verzögerungswarnung sowie eine Verzögerungswarnanlage bekannt, bei dem bzw. bei der während eines Bremsvorgangs ein Integral über die Verzögerung gebildet und dadurch ein Gefahrenwert berechnet wird, entsprechend dem das Signalbild einer Bremsleuchte beeinflußt wird. Nach Beendigung einer Verzögerung erlischt die Bremsleuchte nicht unmittelbar, sondern ihr Leuchten klingt entsprechend einer vorbestimmten Funktion ab. Eine Eigenart solcher Integralbremslichter liegt darin, daß kurze, starke Verzögerungen des vorausfahrenden Fahrzeugs erst mit einer gewissen, durch die Integration bedingten zeitlichen Verzögerung wiedergegeben werden, was im engen Kolonnenverkehr zu Gefahrensituationen führen kann.

Aus dem Stand der Technik (DE 42 28 972 A1) bekannt sind auch Verfahren zum Warnen eines nachfolgenden Fahrzeugs, bei denen eine oder mehrere Bremsleuchten eines vorausfahrenden Fahrzeugs entsprechend der augenblicklichen Verzögerung, insbesondere proportional zur augenblicklichen Verzögerung, aufleuchten. Dabei kann sich die Größe der leuchtenden Fläche und/oder deren Leuchtstärke entsprechend der augenblicklichen Verzögerung ändern. Solche proportional angesteuerten Bremsleuchten erlöschen im allgemeinen unmittelbar nach Beendigung der Verzögerung. Eine Eigenart der proportional zur Verzögerung leuchtenden Bremslichter liegt darin, daß ihr Signalbild wegen der sich im allgemeinen während eines Bremsvorgangs rasch ändernden Verzögerung sehr unruhig ist. Des weiteren ziehen sie auch dann die Aufmerksamkeit des Lenkers eines nachfolgenden Fahrzeugs stark auf sich, wenn von der Bremsung des vorausfahrenden Fahrzeugs keine große Gefahr ausgeht, beispielsweise bei sehr kurzzeitigen starken Verzögerungen, die zu keiner deutlichen Geschwindigkeitsabnahme führen. Am Ende einer andauernden Verzögerung dagegen erfolgt keine Warnung mehr, obwohl von dem abgebremsten Fahrzeug für das noch schneller fahrende nachfolgende Fahrzeug eine große Gefahr ausgeht.

Aus der DE 39 42 151 C2 ist eine Bremsleuchte bekannt, die in Form eines sich in Breitenrichtung des Fahrzeugs erstreckenden Leuchtenbandes mit mehreren Lichtquellen ausgeführt ist. Weiter ist eine Zeitgeberschaltung vorgesehen, die beim Bremsvorgang alle Lichtquellen des Leuchtenbandes einschaltet und nach Beendigung des Bremsvorganges die Lichtquellen paarweise, beispielsweise von außen nach innen, geschaltet werden. Die Ausschaltdauer kann beispielsweise manuell durch Veränderung eines Widerstandes verändert werden. Eine differenzierte Anzeige eines Bremsvorgangs, beispielsweise durch Veränderung der Leuchtstärke oder der Anzahl der aufleuchtenden Lichtquellen ist nicht vorgesehen.

Aus der DE 31 19 386 A1 ist eine Schaltungsanordnung zur Ansteuerung von zusätzlichen, hochgesetzten Bremsleuchten eines Kraftfahrzeugs bekannt, mit der eine Blendung des Fahrzeugführers eines nachfolgenden Fahrzeugs möglichst vermieden werden soll. Dies soll dadurch erreicht werden, daß eine Schaltanordnung der zusätzlichen, hochgesetzten Bremsleuchten, die in Abhängigkeit von der Stellung eines Bremsichtschalters mit einer elektrischen Spannung versorgt werden können, wenigstens ein elektrisches Bauteil aufweist, dessen Zustand von wenigstens einer von der Betätigung des Bremspedals verschiedenen Varianten abhängt und die Lichtstärke der Bremsleuchten bestimmt. Diese Variable kann z.B. die Umgebungshelligkeit, die Stellung des Lichtschalters des Kraftfahrzeugs, die Verzögerung des Fahrzeugs, die Zeitdauer, die seit Beginn der Hellsteuerung der Bremsleuchten vergangen ist, oder auch die Zeitdauer sein, die zu Beginn des Stillstandes eines Fahrzeugs anfängt. Nur bei gewissen Werten der zusätzlichen Variablen leuchten die Bremsleuchten mit größter Lichtstärke, während sonst die Lichtstärke auf einen geringen Wert oder den Wert Null vermindert ist. Wenn beispielsweise die Verzögerung als zusätzliche Variable verwendet wird, ist es möglich, daß die zusätzlichen Bremsleuchten umso heller aufleuchten, je stärker die Verzögerung des Fahrzeugs ist, also proportional zur Fahrzeugverzögerung aufleuchten. Ein Aufleuchten der zusätzlichen Bremsleuchten auch dann, wenn die normalen, beim Betätigen des Bremspedals mit konstanter Leuchtkraft aufleuchtenden Bremsleuchten leuchten, ist nicht vorgesehen.

Der Erfindung liegt die Aufgabe zugrunde, ein Verfahren und eine Vorrichtung zum Warnen eines nachfolgenden Fahrzeugs beim Bremsen eines vorausfahrenden Fahrzeugs anzugeben, das bzw. die die vorgenannten Nachteile beseitigt und eine wirksame Maßnahme zur Verminderung von Auffahrunfällen bildet.

Der das Verfahren betreffende Teil der Erfindungsaufgabe wird mit den Merkmalen des Anspruchs 1 gelöst.

Das erfindungsgemäße Verfahren zeichnet sich dadurch aus, daß während der Bremsung, zumindest solange ein charakteristischer Bremswert nicht abnimmt, das Signalbild des Bremslichts und damit dessen Warnung durch den Maximalwert des Bremswertes gegeben ist. Wird dieser Bremswert unterschritten, so leuchtet die Bremsleuchte trotz abnehmenden Bremswerts zunächst während einer Haftedauer unverändert weiter und erlischt dann innerhalb einer von der Bremsung abhängigen Abklingdauer. Bei dem charakteristischen Bremswert kann es sich um die Fahrzeugverzögerung, den Bremsdruck, die Betätigungskraft eines Bremspedals, den Betätigungsweg des Bremspedals oder eine sonstige, für die Bremsung kennzeichnende Größe handeln.

Mit dem erfindungsgemäßen Verfahren wird eine leicht verständliche und der in der Alltagspraxis von einem abbremsenden Fahrzeug für ein nachfolgendes Fahrzeug ausgehenden Gefahr entsprechende Warnung erzeugt. Das Verfahren ist des weiteren einfach und kostengünstig durchführbar.

Die Unteransprüche 2 bis 7 kennzeichnen vorteilhafte Durchführungen und Weiterbildungen des erfindungsgemäßen Verfahrens.

Der auf die Vorrichtung gerichtete Teil der Erfindungsaufgabe wird mit den Merkmalen des Anspruchs 8 gelöst, der den grundsätzlichen Aufbau der erfindungsgemäßen Vorrichtung kennzeichnet.

Mit dem Merkmal des Anspruchs 9 wird erreicht, daß die durch das Bremslicht erfolgende Warnung bei lang anhaltenden Bremsvorgängen in jedem Fall über das Ende der Fahrzeugverzögerung hinaus andauert, auch wenn der während eines Bremsvorgangs erreichte Maximalwert des Bremswertes erheblich unterschritten wird.

Die Erfindung wird im Folgenden anhand schematischer Zeichnungen beispielsweise und mit weiteren Einzelheiten erläutert.

Es stellen dar:

Fig. 1 ein vereinfachtes Blockschaltbild einer erfindungsgemäßen Warnvorrichtung,

Fig. 2 eine Aufsicht auf ein Bremslicht und

Fig. 3 Kurven zur Erläuterung der Funktion der Erfindung.

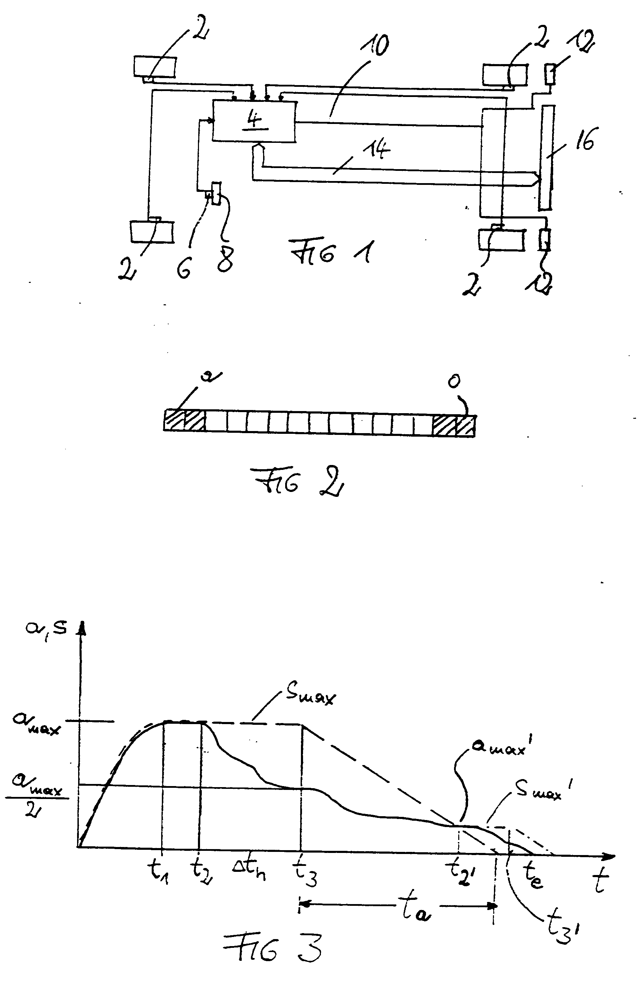

Gemäß Fig. 1 sind an den Rädern eines Kraftfahrzeugs angeordnete Drehzahlsensoren 2 mit einem Steuergerät 4 verbunden, das in an sich bekannter Weise einen Mikroprozessor mit zugehörigen Speichern enthält. Mit dem Steuergerät 4 ist ein Betätigungssensor 6 verbunden, der die Betätigung eines Bremspedals 8 erfaßt. Von dem Steuergerät 4 führt eine Leitung 10 zu konventionellen hinteren Bremsleuchten 12, die in an sich bekannter Weise aufleuchten, sobald das Bremspedal 8 betätigt wird. Weiter führt eine Signalleitung 14 von dem Steuergerät 4 zu einer Bremsleuchte 16, die sich über einen Teil der Fahrzeugbreite erstreckt und gemäß Fig. 2 als ein aus einzelnen Leuchtdioden a bis o zusammengesetztes Leuchtenband ausgebildet ist.

Aufbau und Funktion der einzelnen Bauelemente bzw. Baugruppen sind an sich bekannt und werden daher nicht erläutert. Die Schaltung kann in unterschiedlichster Weise abgeändert sein; beispielsweise kann das Steuergerät 4 in Form mehrerer, dezentraler Steuergeräte ausgebildet sein, von denen eines ein ABS-Bremssystem des Fahrzeugs steuert, ein weiteres den Antriebsstrang (Motor und Getriebe) steuert und ein drittes die Fahrzeugelektrik (Leuchten, Zentralverriegelung usw.) steuert. Die einzelnen Steuergeräte können über ein Bussystem miteinander kommunizieren. Im dargestellten Beispiel befindet sich in der Bremsleuchte 16 ein Interface, das anhand der über die Datenleitung 14 gesendeten Daten den einzelnen Leuchtdioden zugeordnete elektronische Schalter aktiviert, so daß entsprechend den über die Signalleitung 14 geschickten Daten mehr oder weniger Dioden der Bremsleuchte 16 aufleuchten, In Fig. 2 ist ein Zustand dargestellt, bei dem jeweils die beiden äußersten Leuchtdioden leuchten.

Die Erfindung, die sich beispielsweise lediglich in der Programmierung des im Steuergerät 4 enthaltenen Mikroprozessor oder in einzelnen Hardware-Umfängen widerspiegelt, wird anhand der Fig. 3 erläutert:

Die durchgezogene Kurve stellt für einen Bremsvorgang die Verzögerung a in Abhängigkeit von der Zeit t dar. Wie ersichtlich, nimmt die Verzögerung a im dargestellten Beispiel zunächst zunächst stark zu und erreicht einen Maximalwert $a_{max}$. Ausgehend von dem Maximalwert $a_{max}$, der zum Zeitpunkt $t_1$ erreicht wird, dauert die maximale Verzögerung bis zum Zeitpunkt $t_2$ an und nimmt dann unterschiedlich stark auf den Wert Null ab, der zum Zeitpunkt $t_e$ erreicht wird, zu dem der Bremsvorgang beendet ist.

Die gestrichelte Kurve stellt ein in dem Steuergerät 4 errechnetes Steuersignal zur Ansteuerung der Bremsleuchte 16 dar. Dieses Steuersignal entspricht der Warnintensität, die von der Bremsleuchte 16 ausgeht, indem beispielsweise um so mehr Dioden aufleuchten, je größer das Steuersignal ist.

Wie ersichtlich, folgt das Steuersignal s der Verzögerung a, solange diese ansteigt (bis zum Zeitpunkt $t_1$) oder konstant bleibt (bis zum Zeitpunkt $t_2$). Wenn die Verzögerung abnimmt (nach dem Zeitpunkt $t_2$) , bleibt das Steuersignal s zunächst konstant auf seinem dem Wert $a_{max}$ entsprechenden Wert $s_{max}$. Die sogenannte Haltedauer $\Delta t_h$, während der das Steuersignal und damit das Signalbild der Bremsleuchte 16 unverändert bleibt, ist im dargestellten Beispiel durch das Zeitintervall zwischen $t_2$ und $t_3$ bestimmt, wobei $t_3$ derjenige Zeitpunkt ist, zu dem die Verzögerung a auf die Hälfte des Maximalwertes abgefallen ist. Sobald der Zeitpunkt $t_3$ erreicht ist, nimmt das Steuersignal mit einer vorbestimmten zeitlichen Änderung ab, das heißt, im dargestellten Beispiel erlöschen zunehmend Leuchtdioden der Bremsleuchte 16.

Im in Fig. 3 dargestellten Beispiel nimmt der Signalwert s nicht kontinuierlich auf Null ab, sondern bleibt ab dem Zeitpunkt $t_2'$ erneut auf einem konstanten Wert $s_{max}'$, um ab dem Zeitpunkt $t_3'$ mit der vorgegebenen Abklinggeschwindigkeit auf Null abzufallen.

Der Zeitpunkt $t_2'$ ist dadurch gegeben, daß der in einer vorbestimmten Abklingfunktion abnehmende Wert des Steuersignals s unter den Wert fällt, den das der Beschleunigung a zum Zeitpunkt $t_2'$ entsprechende Steuersignal hat. Der Schnittpunktwert $a_{max}'$ wird als neuer Maximalwert genommen. Das Steuersignal bleibt auf dem entsprechenden Wert $S_{max}'$ bis zum Zeitpunkt $t_3'$, zu dem die Verzögerung auf den Wert $a_{max}'/2$ gefallen ist, und nimmt dann entsprechend der vorbestimmten Abklingfunktion ab. Auf diese Weise wird erreicht, daß die dem Steuersignal entsprechende Warnung der Bremsleuchte 16 in jedem Fall über die Dauer der Fahrzeugverzögerung hinaus anhält.

Die beschriebene Funktionalität ist durch entsprechende Programmierung des im Steuergerät enthaltene Mikroprozessors und Speicherung der jeweiligen Werte $a_{max}$ in einfacher Weise realisierbar.

Die Zuordnung zwischen dem Signalwert s und dem Signalbild der Bremsleuchte 16 kann derart sein, daß bei sehr hohen Werten von $a_{max}$, beispielsweise Werten, die in der Nähe von $10 m/s^2$ liegen, alle Leuchtdioden leuchten oder sogar blinken und mit abnehmenden Signalwert von der Mitte der Bremsleuchte 16 aus eine zunehmende Anzahl von Leuchtdioden erlischt.

Es versteht sich, daß andere Arten von Bremsleuchten mit variablem Signalbild verwendet werden können, beispielsweise Bremsleuchten, deren Leuchtintensität sich ändert, deren Leuchtfläche sich anderweitig ändert usw. Die äußeren Bremsleuchten 12, die im Beispiel der Fig. 1 konventionell ausgebildet sind, können in die verzögerungsabhängige Steuerung einbezogen werden, indem sie beispielsweise ebenfalls in ihrer Intensität oder in ihrer Fläche verändert werden.

Für die Zuordnung zwischen Verzögerung und Signalwert bzw. Signalbild der Bremsleuchte gibt es unterschiedlichste Möglichkeiten, wie lineare Zuordnung, progressive Zuordnung, degressive Zuordnung usw.

Die Haltedauer $\Delta t_h$ kann in abgeänderter Weise andauern, bis die Verzögerung auf mehr oder weniger als die Hälfte der Maximalverzögerung abgenommen hat. Dabei kann zusätzlich die Fahrzeuggeschwindigkeit bei Beginn des Bremsvorgangs (t=0) zum Zeitpunkt $t_1$ oder auch zum Zeitpunkt $t_2$ berücksichtigt werden. Die Fahrzeuggeschwindigkeit ist durch Auswertung der Drehzahlsignale der Radsensoren zu jeder Zeit bekannt. Desweiteren kann das Steuergerät 4 derart aufgebaut sein, daß bei Aktivierung eines ABS-Bremssystems (nicht dargestellt; kann im Steuergerät 4 integriert sein) die Fahrzeugverzögerung a auf einen Wert von $a = 10 m/s^2$ gesetzt wird, der einen Maximalwert darstellt. Um die ABS-Aktivierung nicht bereits dann zu berücksichtigen, wenn die Bremsung nur eines Rades über das ABS-Systems gelöst wird, kann das System so ausgebildet werden, daß die ABS-Aktivierung erst dann zu einer Festsetzung der Verzögerung auf den Maximalwert von $10 m/s^2$ führt, wenn zwei diagonal zueinander angeordnete Räder oder drei oder vier Räder gleichzeitig vom ABS-System angesteuert werden. Dies hat den Vorteil, daß das Signalbild vom ABS-System nur dann beeinflußt wird, wenn die Fahrbahn, auf der das Fahrzeug fährt, durchgehend glatt ist.

Zur Bestimmung der Fahrzeuggeschwindigkeit kann, wenn diese in die Algorithmen zur Bestimmung der Haltedauer und/oder der Abklingfunktion eingeht, der Zeitpunkt ausgewählt werden, zu dem die Fahrzeugverzögerung einen vorbestimmten Schwellwert übersteigt oder der Zeitpunkt, zu dem das konventionelle Bremslicht über das Bremspedal oder den Bremsdruck eingeschaltet wird.

Die in Fig. 3 geradlinig eingezeichnete Abklingkurve des Signalwertes s, die das Verlöschen des Bremslichts bestimmt bzw. im Falle der Fig. 3 mitbestimmt, kann nach unterschiedlichsten, zweckentsprechenden Gesichtspunkten bestimmt sein. Die Abklingfunktion kann so festgelegt werden, daß die Abklingzeit $t_a$ (Zeitdauer zwischen $t_3$ und Abfall von s auf Null, falls durch anhaltende Verzögerung nicht ein neuer Wert $S_{max}'$ gesetzt wird (Fig. 3)) beispielsweise abhängt von $v_0$ und/oder $a_{max}$, wobei $v_o$ die Geschwindigkeit zu Beginn eines Bremsvorgangs, bei Erreichen der maximalen Beschleunigung oder bei Unterschreiten der maximalen Beschleunigung ist. z. B.: $t_{al} = k \cdot v_o$ oder $t_a = k \cdot a_{max}$ oder $t_a = k \cdot v_0 \cdot a_{max}$ $t_a = k \cdot v_o^x \cdot a_{max}^y$ oder $t_a = k(v_0 + a_{max}^y)$ oder nach einer irgendeiner anderen Funktion. Die Abklingfunktion kann auch derart bestimmt sein, daß die Abklingzeit $t_a$ von $v_o, a_{max}$ und $t_{omax}$ abhängt, wobei $t_{omax}$ die Zeitdauer ist, während der die maximale Verzögerung vorhanden ist (Zeitdauer zwischen $t_1$ und $t_2$).

Die in Fig. 3 dargestellte Iteration des Abklingens von s ist nicht zwingend; beispielsweise kann $t_3$ so festgelegt werden, daß a bereits auf einen kleinen Wert abgenommen hat, so daß bei einer langsam abnehmenden Abklingfunktion von s die Bremsleuchte im Praxisbetrieb erst dann vollständig erlischt, wenn die Verzögerung zumindest annähernd auf Null abgenommen hat.

Es versteht sich, daß das in Fig. 1 dargestellte System in Digitaltechnik oder auch in Analogtechnik ausgeführt sein kann, wobei die Signalleitung 14 in Analogtechnik ein Signal führt, dessen Amplitude sich mit der Beschleunigung ändert.

**Patentansprüche**

1. Verfahren zum Warnen eines nachfolgenden Fahrzeugs beim Bremsen eines vorausfahrenden Fahrzeugs, bei welchem Verfahren wenigstens ein Bremslicht des vorausfahrenden Fahrzeugs während einer Bremsung abhängig von wenigstens einem Bremswert der Bremsung des Fahrzeugs aufleuchtet und nach Beendigung der Bremsung während einer von der Bremsung abhängigen Zeitdauer erlischt,
dadurch gekennzeichnet,

daß die Bremsleuchte während der Bremsung bei zunehmendem Bremswert entsprechend einem augenblicklichen Wert des Bremswertes leuchtet,

daß das Leuchten entsprechend dem Maximalwert des Bremswertes nach Unterschreiten des Maximalwertes über eine von der Bremsung abhängige Haltedauer andauert und

daß das Leuchten nach Ablauf der Haltedauer während einer von der Bremsung abhängigen Abklingdauer abklingt.

**2.** Verfahren nach Anspruch 1, dadurch gekennzeichnet, daß der Bremswert durch die Fahrzeugverzögerung gegeben ist.

**3.** Verfahren nach Anspruch 1 oder 2, dadurch gekennzeichnet, daß die Bremsleuchte bei Aktivierung eines ABS-Systems entsprechend einem vorbestimmten Bremswert aufleuchtet.

**4.** Verfahren nach einem der Ansprüche 1 bis 3, dadurch gekennzeichnet, daß die Haltedauer durch die Zeitdauer zwischen dem Ende des maximalen Bremswertes und dem Zeitpunkt gegeben ist, zu dem der Bremswert auf einen vorbestimmten Bruchteil des Maximalwertes abfällt.

**5.** Verfahren nach einem der Ansprüche 1 bis 4, dadurch gekennzeichnet, daß die Fahrzeuggeschwindigkeit zu Beginn einer Bremsung erfaßt wird und die Abklingdauer von der Fahrzeuggeschwindigkeit zu Beginn der Bremsung abhängt.

**6.** Verfahren nach einem der Ansprüche 1 bis 4, dadurch gekennzeichnet, daß die Fahrzeuggeschwindigkeit zu Beginn einer Bremsung erfaßt wird und das Leuchten der Bremsleuchte von der Fahrzeuggeschwindigkeit zu Beginn der Bremsung abhängt.

**7.** Verfahren nach einem der Ansprüche 1 bis 6, dadurch gekennzeichnet, daß die Abklingdauer von der Zeitdauer abhängt, während der die Bremsung entsprechend dem maximalen Bremswert erfolgt.

**8.** Vorrichtung zum Warnen eines nachfolgenden Fahrzeugs beim Bremsen eines vorausfahrenden Fahrzeugs, enthaltend,

wenigstens eine Bremsleuchte 16 mit veränderbarem Signalbild und
eine Steuergerät 4 mit einem Rechner, welchem Steuergerät wenigstens ein die Bremsung kennzeichnender, augenblicklicher Bremswert zugeführt wird, aus dem der Rechner einer Steuergröße zur Ansteuerung der Bremsleuchte derart errechnet, daß die Bremsleuchte während einer Bremsung abhängig von dem Bremswert des Fahrzeugs aufleuchtet und nach Beendigung der Bremsung während einer von der Bremsung abhängigen Zeitdauer erlischt,

dadurch gekennzeichnet,

daß der Rechner die Steuergröße derart errechnet, daß die Bremsleuchte 16 während der Bremsung bei zunehmendem Bremswert entsprechend dem augenblicklichen Bremswert leuchtet,

daß das Leuchten entsprechend dem Maximalwert des Bremswertes nach Unterschreiten des Maximalwertes über eine von der Bremsung abhängige Haltedauer andauert und

daß das Leuchten nach Ablauf der Haltedauer während einer von der Bremsung abhängigen Abklingdauer abklingt.

**9.** Vorrichtung nach Anspruch 8, dadurch gekennzeichnet, daß während der Abklingdauer die das Abklingen bestimmende Steuergröße mit einer Steuergröße verglichen wird, die einem Aufleuchten der Bremsleuchte entsprechend dem jeweiligen augenblicklichen Brernswert entspricht und daß der augenblickliche Bremswert als neuer maximaler Bremswert genommen wird, wenn die das Abklingen bestimmende Steuergröße gleich oder kleiner als die dem augenblicklichen Bremswert entsprechende Größe ist.

Fig 1

Fig 2

Fig 3